# EUROPÄISCHE PATENTSCHRIFT

(11) **EP 4 382 267 B1**
(45) Veröffentlichungstag und Bekanntmachung des Hinweises auf die Patenterteilung: **29.04.2026**
(21) Anmeldenummer: 23000175.2
(22) Anmeldetag: 05.12.2023
(51) Int. Cl.: B25J 13/08, B25J 15/00

(54) **ZWEI-SYSTEM-GREIFER MIT ERHÖHTER BETRIEBSSICHERHEIT**
TWO-SYSTEM GRIPPER WITH INCREASED OPERATING SAFETY
PINCE À DEUX SYSTÈMES À SÉCURITÉ DE FONCTIONNEMENT ACCRUE

(30) Priorität: 08.12.2022 DE 102022004603
(43) Veröffentlichungstag der Anmeldung: 12.06.2024
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- EP-A1- 3 290 167
- EP-A1- 3 960 397
- DE-A1- 102021 005 730
- DE-B- 1 200 498
- DE-B3- 102005 003 780

## Beschreibung

Die Erfindung betrifft einen Zwei-System-Greifer mit zwei gemeinsam in einem Gehäusesystem angeordneten Greifeinrichtungen unterschiedlicher physikalischer Wirkprinzipien zum redundanten oder ergänzenden Einsatz im gleichen Greifraum.

Aus der DE 10 2021 005 730 A1 ist ein Zwei-System-Greifer mit einer Elektromagnet-Greifeinrichtung und mit einer Sauggreifeinrichtung bekannt. Beim Saugen können die in der elastisch verformbaren Saugmanschette geführten Pneumatikkanäle abgeklemmt werden. Wie das Aufnahmen eines Greifguts kontrolliert wird, ist in dieser Druckschrift nicht offenbart.

Die EP 3 960 397 A1 offenbart ein Greifersystem mit einem Parallelogrammgreifer und einem optionalen Sauggreifer. Jeder der Greifer hat einen eigenen Greifraum, wobei sich die beiden Greifräume überschneiden können. Zur Funktionsüberwachung sind für die Regelung der Antriebsmotoren und zur Leckageüberwachung des pneumatischen Systems Sensoren vorgesehen.

Der vorliegenden Erfindung liegt die Problemstellung zugrunde, die Betriebssicherheit und Zuverlässigkeit eines Zwei-System-Greifers zu erhöhen.

Diese Problemstellung wird mit den Merkmalen des Hauptanspruches gelöst. Dazu weist der Zwei-System-Greifer mindestens zwei Greifgutsensoren für unterschiedliche physikalische Größen auf, die jeweils am oder im Gehäusesystem angeordnet sind. Mittels des einzelnen Greifgutsensors ist prüfbar, ob ein aufzunehmendes Greifgut sich in der Greiflage befindet, sodass das Greifgut mittels des Zwei-System-Greifers aufgenommen werden kann.

Beide Greifeinrichtungen arbeiten im identischen Greifraum. Ein aufzunehmendes Greifgut kann damit entweder mittels der einen Greifeinrichtung oder mittels der anderen Greifeinrichtung aufgenommen werden. Es ist auch denkbar, ein Greifgut mittels beider Greifeinrichtungen gemeinsam aufzunehmen. Der einzelne Greifgutsensor prüft, ob das aufzunehmende Greifgut sich in der Greiflage befindet, sodass das Greifgut mittels des Zwei-System-Greifers aufgenommen werden kann. Die Greifgutsensoren können alternativ oder ergänzend das Greifgut überwachen. Hierbei werden mittels der beiden Greifgutsensoren unterschiedliche physikalische Größen, z.B**.** ein Abstand und ein Druck, überwacht. Beim Ausfall eines der Greifgutsensoren kann die Greifaufgabe z.B**.** bis zu einem nächsten geplanten Wartungsintervall mittels des zweiten Greifgutsensors fortgesetzt werden.

Weitere Einzelheiten der Erfindung ergeben sich aus den Unteransprüchen und der nachfolgenden Beschreibung schematisch dargestellter Ausführungsformen.
- Figur 1:: Zwei-System-Greifer;
- Figur 2:: Anschlussseite von Figur 1;
- Figur 3:: Längsschnitt der Figur 1;
- Figur 4:: Anschlussgehäuse;
- Figur 5:: Längsschnitt des Betriebsgehäuses durch den Absaugkanal;
- Figur 6:: Längsschnitt des Betriebsgehäuses durch den Steuerkanal;
- Figur 7:: Entlüftung des Betriebsgehäuses;
- Figur 8:: Variante eines Zwei-Greifer-Systems.

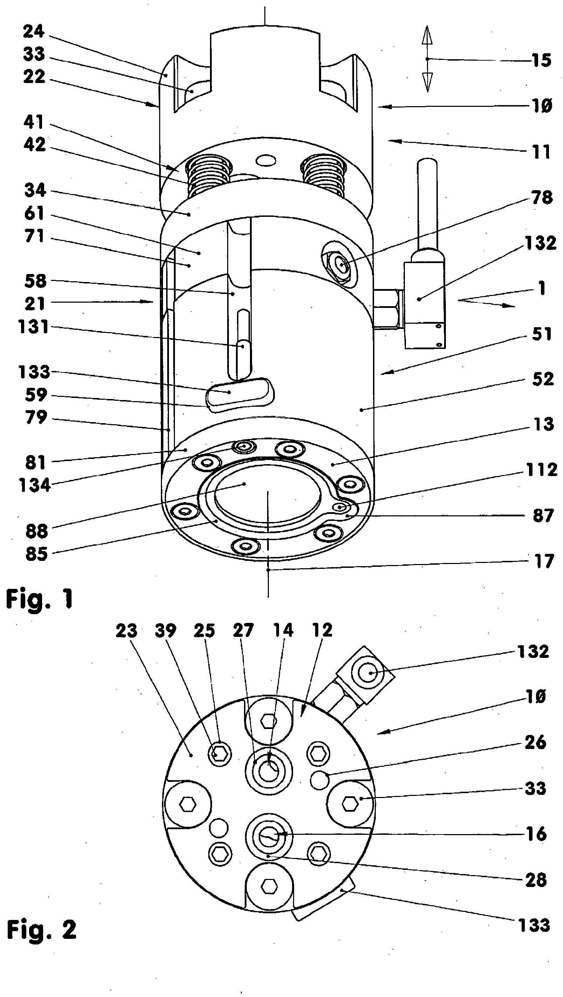

Die Figuren 1 - 7 zeigen einen Zwei-System-Greifer (10). Der in diesen Figuren dargestellte Zwei-System-Greifer (10) ist ein kombinierter Magnet-Sauggreifer (11) Er hat ein Gehäusesystem (21), in dem als erste Greifeinrichtung (91) eine Magnetgreifeinrichtung (91) und als zweite Greifeinrichtung (111) eine Sauggreifereinrichtung (111) angeordnet sind. Die beiden Greifeinrichtungen (91, 111) dieses Ausführungsbeispiels haben eine identische Greifgut-Anlagefläche.

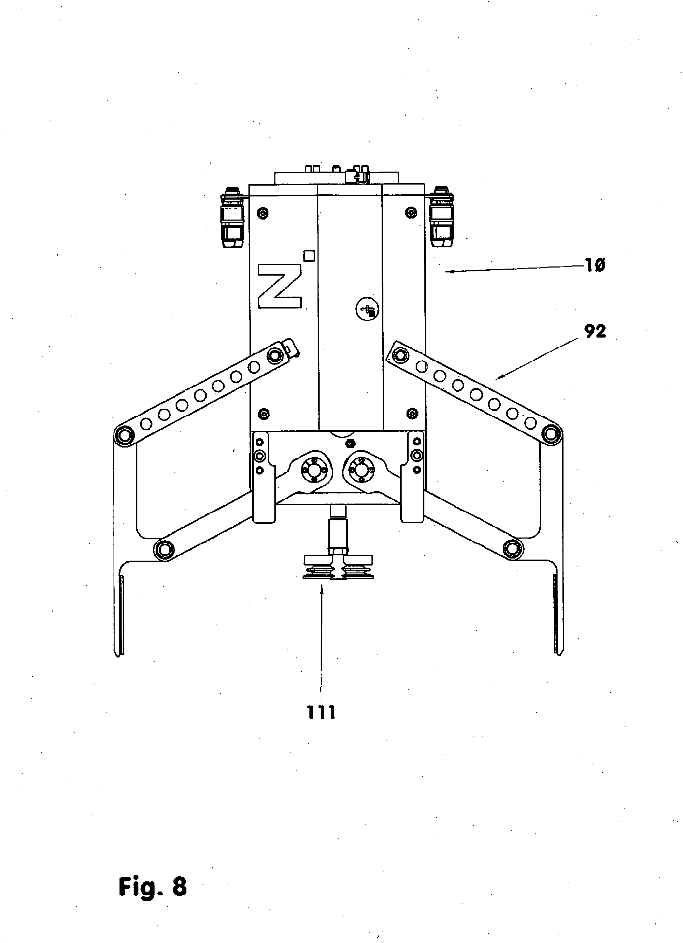

Der Zwei-System-Greifers (10) kann auch mit anderen physikalischen Wirkprinzipien der einzelnen Greifeinrichtungen (91; 111) ausgebildet sein. So kann z.B. eine Parallel- oder Winkelgrcifereinrichtung oder eine Adhäsiongreifeinrichtung mit einer Magnetgreifeinrichtung oder mit einer Sauggreifereinrichtung kombiniert werden. Auch eine Kombination einer Parallellogrammgreifereinrichtung (92) mit einer Sauggreifeinrichtung (111), vgl. Figur 8 oder mit einer Magnetgreifeinrichtung ist denkbar. Die beiden Greifeinrichtungen (91, 111; 92, 111) des Zwei-System-Greifers (10) können Greifgüter, z.B. Stückgüter, im gleichen Greifraum aufnehmen. Bei allen genannten Ausführungsformen können die beiden Greifeinrichtungen (91, 111; 92, 111) alternativ oder ergänzend eingesetzt werden.

Die beiden Greifeinrichtungen (91, 111; 92, 111) des Zwei-System-Greifers (10) sind in einem gemeinsamen Gehäusesystem (21) angeordnet. Das Gehäusesystem (21) hat im Ausführungsbeispiel der Figuren 1 - 7 vier integrierte Ausgleichselemente (42), die auf einem gemeinsamen Teilkreis parallel zueinander angeordnet sind. Diese Ausgleichselemente (42) bilden zusammen mit den sie führenden Linear-Führungselementen (33) einen Linearausgleichsbereich (41) des Gehäusesystems (21).

Das Gehäusesystem (21) ist in den Darstellungen der Figuren 1 - 7 zweiteilig aufgebaut. Es hat ein Anschlussgehäuse (22) mit dem Ausgleichsbereich (41) und ein Betriebsgehäuse (51). Diese sind in einer Längsrichtung (15) des Zwei-System-Greifers (10) hintereinander angeordnet. Das Gehäusesystem (21) des Zwei-System-Greifers (10) kann ohne das Anschlussgehäuse (22) und/oder den Ausgleichsbereich (41) ausgeführt sein. Im Ausführungsbeispiel haben das Anschlussgehäuse (22) und das Betriebsgehäuse (51) das gleiche Anschlussbohrbild.

Das Anschlussgehäuse (22), vgl. Die Figuren 1 - 4, hat eine zylinderförmige Hüllkontur. Es ist topfartig ausgebildet. An seiner Oberseite (23) hat es einen Anschlussflansch (24). Dieser hat z.B. vier Gewindebohrungen (25) und zwei Stiftaufnahmen (26). Die Gewindebohrungen (25) sind im Ausführungsbeispiel als Durchgangsgewindebohrungen ausgebildet. Beispielsweise kann der Zwei-System-Greifer (10) mittels dieses Anschlussflansches (24) an einem Industrieroboter befestigt werden. Die Oberseite (23) des Anschlussflansches (24) ist im Folgenden als Anschlussseite (12) des Zwei-Greifer-Systems (10) bezeichnet.

Der Anschlussflansch (24) weist zwei pneumatische Anschlüsse (27, 28) auf. In jedem der pneumatischen Anschlüsse (27, 28) ist ein Dichtring (29), z.B. ein O-Ring, angeordnet. Im Ausführungsbeispiel ist ein erster der pneumatischen Anschlüsse (27) ein Sauganschluss (27). Dieser ist Teil eines ersten Pneumatikkanals (14), der die Anschlussseite (12) mit einer Greifgutseite (13) des Zwei-System-Greifers (10) verbindet. Der erste Pneumatikkanal (14) ist im Folgenden auch als Absaugkanal (14) bezeichnet. Ein zweiter der pneumatischen Anschlüsse (28) ist ein Druckanschluss (28). Der Druckanschluss (28) ist Teil eines zweiten Pneumatikkanals (16), der in einem Gehäuseinnenraum (53) des Betriebsgehäuses (51) endet. Der zweite Pneumatikkanal (16) ist im Folgenden auch als Steuerkanal (16) bezeichnet. An die pneumatischen Anschlüsse (27, 28) schließt im Anschlussflansch (24) jeweils eine kurze zylindrische Leitung (31) an, die in einem Führungstopf (32) endet.

Im äußeren Bereich des Anschlussflansches (24) sind z.B. vier Gewindeschrauben (33) zugänglich. Diese Gewindeschrauben (33) durchdringen das Anschlussgehäuse (22). Sie durchqueren den Ausgleichbereich (41) und sind in eirem Bodenteil (34) des Anschlussgehäuses (22) eingeschraubt. Im Ausgleichsbereich (41) trägt jede der Gewindeschrauben (33) ein Ausgleichselement (42). Sie bilden damit die Linear-Führungselemente (33) der Ausgleichselemente (42). Im Ausführungsbeispiel ist das jeweilige Ausgleichselement (42) eine Schraubenfeder (42) in der Bauform einer Druckfeder. Die einzelne Druckfeder (42) stützt sich im Ausführungsbeispiel in einem Federtopf (35) des Anschlussflansches (24) und am Bodenteil (34) ab. Es ist auch denkbar, ein einzelnes lineares Ausgleichselement (42) im Gehäusesystem (21) anzuordnen. Dieses kann beispielsweise auch als Elastomerelement, Gasdruckfeder, Zylinder-Kolben-Einheit, etc. ausgebildet sein. Auch eine andere Ausgestaltung oder Anordnung des Linearausgleichsbereiches (41) ist denkbar.

In jeden der beiden Führungstöpfe (32) ragt jeweils ein Pneumatikrohr (36). Das einzelne Pneumatikrohr (36) ist im Bodenteil (34) beispielsweise mittels eines Sicherungsrings (37) gesichert. Im Anschlussflansch (24) ist das einzelne Pneumatikrohr (36) z.B. mittels eines Quadrings (38) geführt und gelagert.

Im Bodenteil (34) sitzen z.B. vier Verbindungsschrauben (39), die das Anschlussgehäuse (22) mit dem Betriebsgehäuse (51) verbinden.

Das Betriebsgehäuse (51), vgl. die Figuren 1 - 3 und 4 - 7, hat im Ausführungsbeispiel eine zylinderförmige Hüllkontur. Es hat einen Grundkörper (52), einen mit diesem gefügten Deckel (61) und einen am Grundkörper (52) befestigten Boden (81). Der Deckel (61), der Grundkörper (52) und der Boden (81) umschließen den Gehäuseinnenraum (53).

Der Deckel (61) ist scheibenförmig ausgebildet. An seiner Oberseite hat er z.B. vier Gewindebohrungen (63) zur Aufnahme der Verbindungsschrauben (39). Zwei Stiftaufnahmen (64) korrespondieren miteinander zur Aufnahme von Zentrierstiften mit entsprechenden Stiftaufnahmen des Bodenteils (34).

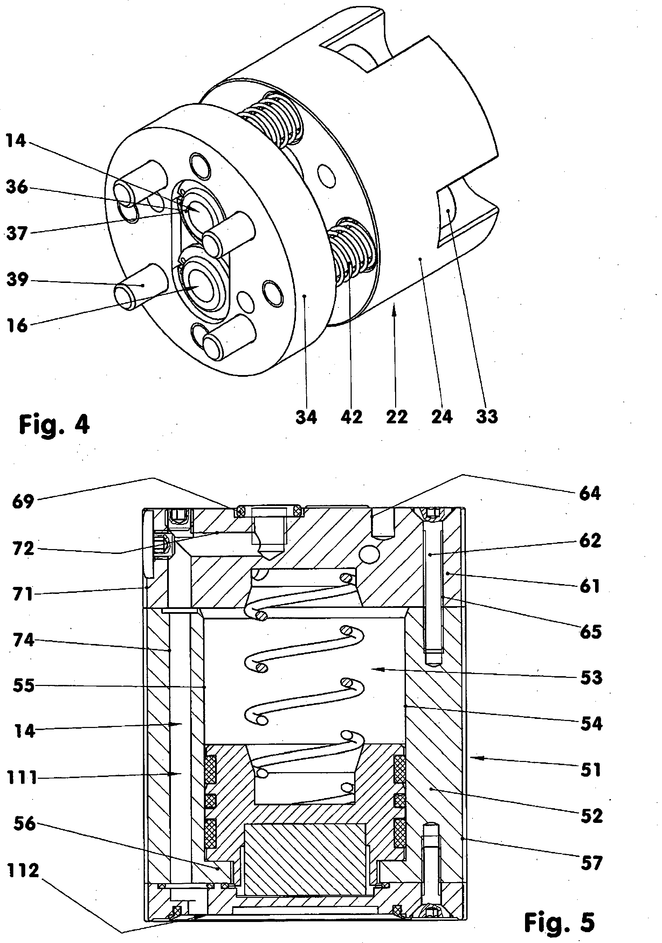

Auf einem gemeinsamen Teilkreis sind sechs Durchgangsbohrungen (65) für Deckelverschlussschrauben (62) angeordnet, vgl. Figur 5. Diese Durchgangsbohrungen (65) sind beispielsweise abgesenkt ausgebildet. Die Deckelverschlussschrauben (62) verbinden den Deckel (61) mit dem Grundkörper (52). Zusätzlich sichern z.B. zwei asymmetrisch zueinander angeordnete Zentrierstifte die Lage des Deckels (61) relativ zum Grundkörper (52).

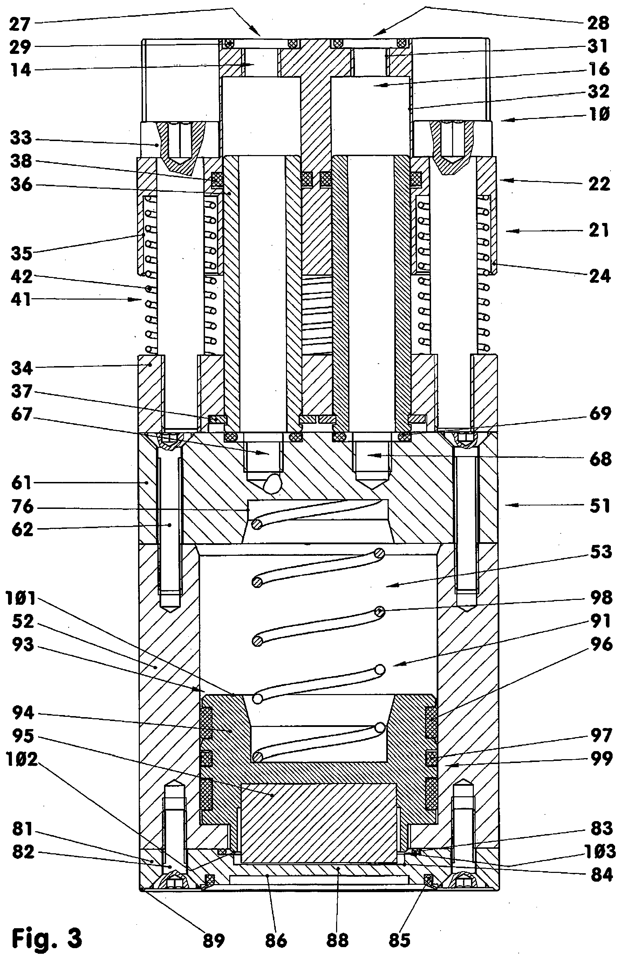

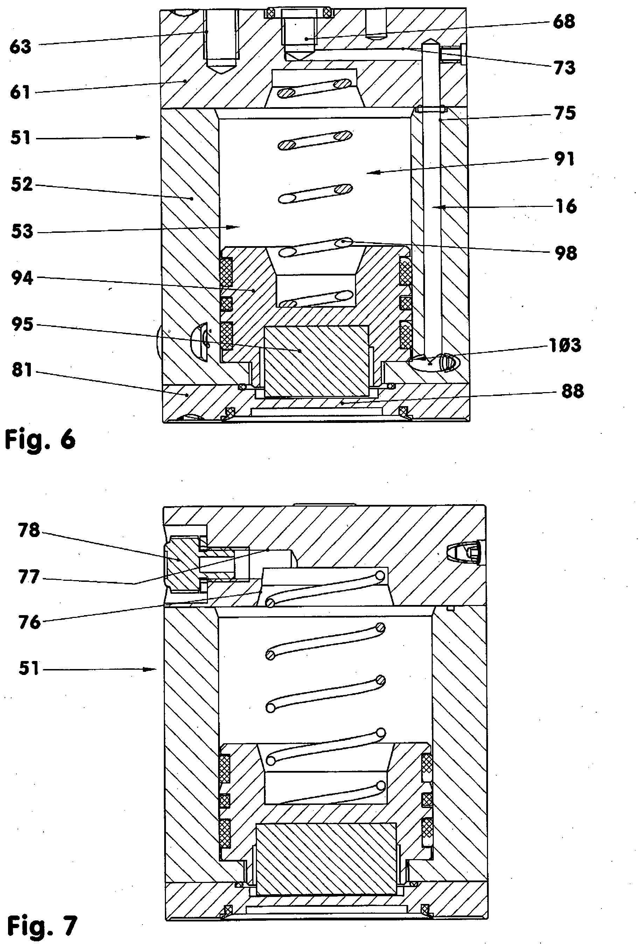

Der Absaugkanal (14) und der Steuerkanal (16) sind im Betriebsgehäuse (51) fortgesetzt. Die beiden Pneumatikrohre (36) münden im Deckel (61) in jeweils eine Pneumatikleitung (67; 68), vgl. Figur 3. Der Übergang ist jeweils mittels eines O-Rings (69) gegen die Umgebung (1) abgedichtet. Vom Übergang aus verläuft die einzelne Pneumatikleitung (67; 68) zunächst in der Längsrichtung (15) und geht dann in einen radial in Richtung der Mantelfläche (71) orientierten Radialkanal (72; 73) über, vgl. die Figuren 5 und 6. Im Randbereich des Deckels (61) geht der einzelne Radialkanal (72; 73) jeweils in einen Längskanal (74; 75) über.

Im Absaugkanal (14) ist am mantelflächenseitigen Ende des Radialkanals (72) ein Drucksensor (132) angeschlossen. Dieser Drucksensor (132) kann als binärer Sensor, z.B. als Druckschalter, oder als analoger Sensor, Z.B. als Druckmessaufnehmer ausgebildet sein. Bei der Ausbildung als Druckschalter, z.B. als Differenzdruckschalter, wird bein Überschreiten eines voreingestellten Schwellenwertes ausgangsseitig ein Signalzustand geändert. Das Ausgangssignal eines Druckmessaufnehmers ist beispielsweise ein druckproportionales Ausgangssignal mit einer Stromstärke zwischen 4 Milliampere und 20 Milliampère.

Die Unterseite des Deckels (61) hat eine Federaufnahme (76), die Teil des Gehäuseinnenraums (53) ist. Diese Federaufnahme (76) ist über einen Entlüftungskanal (77), vgl. Figur 7, mit einem an der Mantelfläche (71) befestigten Ausgangsfilter (78) verbunden. An der Mantelfläche (71) sind beispielsweise drei Montagenuten (79) eingeprägt.

Der Grundkörper (52) ist rohrförmig ausgebildet. Die Innenwandung (54) hat einen zylindrischen Abschnitt (55). Im unteren Bereich ist ein nach innen orientierter Anschlagbund (56) ausgebildet.

Im Grundkörpermantel (57) sind die Längskanäle (74, 75) als Teile der Pneumatikkanäle (14; 16) fortgesetzt. Der Absaugkanal (14) durchdringt den Grundkörper (52) in der Längsrichtung (15). Der Steuerkanal (16) mündet unmittelbar oberhalb des Anschlagbundes (56) in den Gehäuseinnenraum (53).

An der Außenseite des Grundkörpermantels (57) sind zwei Sensoraufnahmen (58, 59) ausgebildet. In einer ersten Sensoraufnahme (58) sitzt bei montiertem Zwei-System-Greifer (10) ein erster Greifgutsensor (131). Beim Betrieb des Zwei-System-Greifers (10) prüft der Greifgutsensor (131), ob ein Greifgut am Zwei-Wege-Greifer (10) anliegt. Im Ausführungsbeispiel ist der Greifgutsensor (131) als Näherungssensor (131), z.B. als induktiver Näherungssensor ausgebildet. Dieser Greifgutsensor (131) ändert sein Ausgangssignal, wenn ein ferromagnetischer Gegenstand ein voreingestelltes Abstandsmaß unterschreitet. Das daraufhin ausgegebene Ausgangssignal wird in der nachgeschalteten Signalauswertung als Freigabesignal für die Greiferablaufsteuerung eingesetzt. Als Greifgutsensor (131) kann auch ein kapazitiver Näherungsschalter, ein mechanischer Endschalter, ein Taster, ein optischer Sensor, etc. eingesetzt werden. Die mittels des ersten Greifgutsensors (131) geprüfte physikalische Größe, der Abstand, ist unabhängig vom physikalischen Wirkprinzip der beiden Greifeinrichtungen (91, 111) des Zwei-System-Greifers (10).

In der zweiten Sensoraufnahme (59) sitzt im Ausführungsbeispiel ein Magnetfeldsensor (133). Beispielsweise ist seine Lage mit einer Fixierschraube und mit zwei Druckfedern festgelegt. Das Ausgangssignal des Magnetfeldsensors (133) ist abhängig von der aktuellen Position eines im Magnetfeld bewegten Magneten. Anstatt eines Magnetfeldsensors (133) können im Ausführungsbeispiel der Figuren 1 - 7 ein oder zwei Näherungsschalter vorgesehen sein. Mit diesen werden beispielsweise eine oder zwei Endlagen eines bewegten Körpers geprüft.

Der Boden (81) des Betriebsgehäuses (51) ist scheibenförmig ausgebildet. Es ist mittels z.B. sechs Bodenteilschrauben (82) am Grundkörper (52) befestigt. Beispielsweise durchdringen der abgedichtet geführte Absaugkanal (14) und der Greifgutsensor (131) den Boden (81). Ein Zentrierstift dient der Lagezentrierung des Bodens (81) relativ zum Grundkörper (52). Der Gehäuseinnenraum (53) ist mittels eines zwischen dem Grundkörper (52) und dem Boden (81) angeordneten Dichtrings (83) gegen die Umgebung (1) abgedichtet.

Der Boden (81) ist im Ausführungsbeispiel aus Aluminium, Kunststoff oder einem anderen nicht ferromagnetischen Werkstoff hergestellt. Die dem Gehäuseinnenraum (53) zugewandte Oberseite des Bodens (81) hat im zentralen Bereich eine Einsenkung (84). Beispielsweise ist diese kreisförmig ausgebildet.

An der Greifgutseite (13) des Zwei-System-Greifers (10) trägt der Boden (81) eine Saugmanschette (85). Die Saugmanschette (85) ist aus einem elastomeren Werkstoff hergestellt. Ihre Höhe beträgt beispielsweise weniger als 1 % der in der Längsrichtung (15) orientierten Länge des Zwei-Greifer-Systems (10). Die Saugmanschette (85) ist beispielsweise weitgehend kreisförmig ausgebildet. Sie umgibt eine Bodeneinsenkung (86) und mit einer Nase (87) eine Saugöffnung (112) der Sauggreifeinrichtung (111). Die Saugöffnung (112) ist beispielsweise exzentrisch zu der in der Längsrichtung (15) orientierten Mittellinie (17) des Zwei-Greifer-Systems (10) angeordnet. Der Querschnizt der Saugöffnung (112) entspricht dem Querschnitt des ersten Pneumatikkanals (14). Der von der Saugmanschette (85) umgebene Bereich des Bodens (81) wird im Folgenden auch als Felddurchtrittswand (88) bezeichnet.

Der Sensorkopf (134) des beschriebenen ersten Greifgutsensors (131) liegt im Ausführungsbeispiel außerhalb der Saugmanschette (85). Ein Abstützring (89) des Bodens (81) umgibt die Saugmanschette (85) und den Sensorkopf (134). Der Abstützring (89) überragt die Saugmanschette (85), sodass bei einem Abstellen des Zwei-Greifer-Systems (10) die Saugmanschette (85) nicht beschädigt wird.

Im Gehäuseinnenraum (53) ist ein Kolbensystem (93) der ersten Greifeinrichtung (91) angeordnet. Es weist einen in der Längsrichtung (15) des Zwei-Greifer-Systems (10) verfahrbaren Kolben (94) auf. Eine Stützfeder (98) belastet den Kolben (94) in die in den Figuren dargestellte untere Endlage (99). Die Stützfeder (98) ist beispielsweise als Druckfeder (98) ausgebildet und stützt sich in der Federaufnahme (76) des Deckels (61) ab.

Der Kolben (94) ist im Gehäuseinnenraum (53) mittels zweier Führungsringe (96) geführt. Ein zwischen den Führungsringen (96) angeordneter Quadring (97) dichtet im Gehäuseinnenraum (53) die beiden Kolbenseiten (101, 102) voneinander ab. An seiner Kolbenunterseite (102) trägt der Kolben (94) einen Permanentmagneten (95). Dieser hat in der unteren Endlage (99) des Kolbens (94) z.B. einen Abstand von 0,2 Millimetern von der Felddurchtrittswand (88). In dieser unteren Endlage (99) des Kolbens (94) schneidet die gedachte horizontale Mittenebene des Magnetfeldsensors (133) den Permanentmagneten (95).

Für den Einsatz wird der Zwei-System-Greifer (10) beispielsweise an einem Handhabungsgerät, z.B. an einem Industrieroboter, befestigt. Vom Handhabungsgerät aus erfolgt beispielsweise auch die pneumatische und elektrische Versorgung des Zwei-System-Greifers (10).

Zum Greifen eines Greifguts wird der Zwei-System-Greifer (10) z.B. oberhalb des Greifquts positioniert. Das Greifgut kann nun entweder mit einer einzelnen der Greifeinrichtungen (91; 111) oder mit beiden Greifeinrichtungen (91, 111) zusammen aufgenommen werden.

Um ein Greifgut mittels der Sauggreifeinrichtung (111) aufzunehmen, wird bei Annäherung an das Greifgut der Druck im ersten Pneumatikkanal (14) unter den Atmosphärendruck abgesenkt. Der erste Greifgutsensor (131) meldet das Erreichen des vorgesehenen Abstands zum Greifgut. Sobald der am Drucksensor (132) anstehende Druckwert einen für die Greifaufgabe vorgegebenen Sollwert unterschreitet, kann der Industrieroboter das Zwei-Greifer-System (10) zusammen mit dem Greifgut anheben. Der Drucksensor (132) dient als Funktionssensor (132) der zweiten Greifvorrichtung (111). Mittels des Funktionssensors (132) wird die Funktion der Greifeinrichtung (111) überwacht. Gegebenenfalls kann das mindestens eine Ausgleichselement (42) beim Aufliegen des Zwei-System-Greifers (10) auf dem Greifgut komprimiert werden. Aufgrund des entstehenden Unterdrucks bildet der Drucksensor (132) einen zweiten Greifgutsensor (132) des Zwei-Greifer-Systems (10). Die beiden Greifgutsensoren (131, 132) können mittels einer "Oder"-Abfrage überwacht werden.

Zum Ablegen des Greifguts wird der Druck im ersten Pneumatickanal (14) in Richtung des Atmosphärendrucks erhöht. Sobald beispielsweise dieser Druck den Atmosphärendruck erreicht hat, kann das Handhabungssystem den Zwei-Wege-Greifer (10) vom Greifgut abheben. Auch beim Ablegen des Greifguts können die Ausgleichselemente (42) elastisch komprimiert werden. Diese Kompression kann beispielsweise mittels eines hubabhängigen Sensors überwacht werden. Beispielsweise erfolgt die Freigabe zum Entlasten des Zwei-System-Greifers (10) erst bei einer vorgegebenen Kompression des Linearausgleichsbereichs (41). Das Greifgut liegt dann sicher auf einer Unterlage auf.

Zum Aufnehmen des Greifguts mittels der Magnetgreifeinrichtung (91) wird der Zwei System-Greifer (10) z.B. von oben an das Greifgut angenähert. Der den Permanentmagneten (95) tragende Kolben (94) steht hierbei in der in den Figuren dargestellten unteren Endlage (99). Der Magnetfeldsensor (133) - er ist ein Funktionssensor (133) der ersten Greifeinrichtung (91) - bestätigt diese Kolbenlage. Beim Anlegen der Saugmanschette (85) an das Greifgut durchdringt das Magnetfeld des Permanentmagneten (95) das Greifgut. Beim Betrieb mittels der ersten Greifeinrichtung (91) legt sich der in den Figuren 1 - 7 dargestellte Zwei-System-Greifer (10) mit der gleichen Greifgut-Anlagefläche an das Greifgut an wie beim Betrieb mit der zweiten Greifeinrichtung (111). Bei Anlage des Zwei-System-Greifers (10) am Greifgut gibt das Ausgangssignal des ersten Greifgutsensors (131) die Freigabe für die Folgefunktion des Zwei-System-Greifers (10), z.B. das Anheben des Greifguts. Auch in diesem Fall kann der lineare Hub der Ausgleichselemente (42) als zusätzliches Freigabesignal für die Folgefunktion genutzt werden.

Bei einem zu kleinen Greifgut oder beispielsweise bei einem Ausfall des ersten Greifgutsensors (131) kann die Sauggreifeinrichtung (111) eingeschaltet werden. Damit wird der zweite Greifgutsensor (132) aktiviert. Sobald dieser einen Unterdruck ermittelt, kann das Greifgut aufgenommen werden. Weiterhin kann ein Kraftsensor vorgesehen sein, um die Fügekraft zwischen dem Zwei-System-Greifer (10) und dem Greifgut zu überwachen. Dies kann beispielsweise eine Kraftmessdose, ein Dehnmesstreifen, etc. sein.

Zum Ablegen des Greifguts wird dieses beispielsweise auf dem Boden abgesetzt. Im Steuerkanal (16) wird der pneumatische Druck erhöht. Der vom Kolben (94) und dem Boden (81) begrenzte Druckraum (103) wird mittels des pneumatischen Drucks beaufschlagt. Der Kolben (94) wird unter Belastung der Stützfeder (98) nach oben verschoben. Luft aus dem Gehäuseinnenraum (53) wird durch den Ausgangsfilter (78) in die Umgebung (1) verdrängt. Die auf die Felddurchtrittswand (88) bezogene Stärke des Magnetfelds des Permanentmagneten (95) wird vermindert. Das Greifgut wird entlastet. Sobald das mittels des Magnetfeldsensors (133) beobachtete Magnetfeld einen z.B. voreingestellten Schwellenwert unterschritten hat, kann der Zwei-System-Greifer (10) vom Greifgut abgehoben werden. Als Funktionssensor der ersten Greifvorrichtung (91) kann auch ein Druckschalter eingesetzt werden, der den pneumatischen Druck im Steuerkanal (16) prüft.

Nach dem Abheben des Zwei-System-Greifers (10) vom Greifgut kann der pneumatische Druck im Druckraum (103) und im Steuerkanal (16) vermindert werden. Der Kolben (94) wird unter Entlastung der Stützfeder (98) in die untere Endlage (99) verschoben.

Der Permanentmagnet (95) kann auch starr im Gehäuseinnenraum (53) angeordnet sein. In diesem Fall wirkt er beispielsweise mit einer elektrischen Spule zusammen, die beim Betrieb ein Gegenfeld erzeugt. Damit kann das auf die Felddurchtrittswand (88) bezogene Magnetfeld gesteuert werden. Auch der Einsatz eines Elektromagneten anstatt eines Permanentmagneten (95) ist denkbar.

In dem in der Figur 8 dargestellten Zwei-System-Greifer (10) können der erste Greifgutsensor (131) und der zweite Greifgutsensor (132) so ausgebildet sein, wie im Zusammenhang mit dem Ausführungsbeispiel der Figuren 1 - 7 beschrieben. Als Funktionssensor der ersten Greifeinrichtung (92) kann beispielsweise ein Wegsensor, Kraftsensor, Drehratensensor, etc. eingesetzt werden.

Auch Kombinationen der einzelnen Ausführungsbeispiele sind denkbar , sofern sie von den Ansprüchen abgedeckt sind.

### Bezugszeichenliste:

- 1: Umgebung

- 10: Zwei-System-Greifer
- 11: Magnet-Sauggreifer
- 12: Anschlussseite
- 13: Greifgutseite
- 14: erster Pneumatikkanal, Absaugkanal
- 15: Längsrichtung
- 16: zweiter Pneumatikkanal, Steuerkanal
- 17: Mittellinie von (10)

- 21: Gehäusesystem
- 22: Anschlussgehäuse
- 23: Oberseite
- 24: Anschlussflansch
- 25: Gewindebohrungen
- 26: Stiftaufnahmen
- 27: pneumatischer Anschluss, Sauganschluss
- 28: pneumatischer Anschluss, Druckanschluss
- 29: Dichtring

- 31: zylindrische Leitung
- 32: Führungstopf
- 33: Linear-Führungselemente, Gewindeschrauben
- 34: Bodenteil von (22)
- 35: Federtopf
- 36: Pneumatikrohr
- 37: Sicherungsring
- 38: Quadring
- 39: Verbindungsschrauben
- 41: Linearausgleichsbereich
- 42: Ausgleichselement, Schraubenfeder, Druckfeder

- 51: Betriebsgehäuse
- 52: Grundkörper
- 53: Greiferinnenraum, Gehäuseinnenraum
- 54: Innenwandung
- 55: zylindrischer Abschnitt
- 56: Anschlagbund
- 57: Grundkörpermantel
- 58: Sensoraufnahme
- 59: Sensoraufnahme

- 61: Deckel
- 62: Deckelverschlussschrauben
- 63: Gewindebohrungen
- 64: Stiftaufnahmen
- 65: Durchgangsbohrungen

- 67: Pneumatikleitung
- 68: Pneumatikleitung
- 69: O-Ring

- 71: Mantelfläche
- 72: Radialkanal
- 73: Radialkanal
- 74: Längskanal
- 75: Längskanal
- 76: Federaufnahme
- 77: Entlüftungskanal
- 78: Ausgangsfilter
- 79: Montagenuten

- 81: Boden
- 82: Verschlussschrauben, Bodenteilschrauben
- 83: Dichtring
- 84: Einsenkung
- 85: Saugmanschette
- 86: Bodeneinsenkung
- 87: Nase
- 88: Felddurchtrittswand
- 89: Abstützring

- 91: erste Greifeinrichtung, Magnetgreifeinrichtung
- 92: Parallelogrammgreifeinrichtung
- 93: Kolbensystem
- 94: Kolben
- 95: Permanentmagnet
- 96: Führungsringe
- 97: Quadring
- 98: Stützfeder, Druckfeder
- 99: untere Endlage von (94)

- 101: Kolbenseite
- 102: Kolbenseite
- 103: Druckraum

- 111: zweite Greifeinrichtung, Sauggreifeinrichtung
- 112: Saugöffnung

- 131: erster Greifgutsensor, Näherungssensor
- 132: Drucksensor, zweiter Greifgutsensor, Funktionssensor
- 133: Magnetfeldsensor, Funktionssensor
- 134: Sensorkopf von (131)

## Patentansprüche

1. Zwei-System-Greifer (10) mit zwei gemeinsam in einem Gehäusesystem (21) angeordneten Greifeinrichtungen (91, 111; 92, 111) unterschiedlicher physikalischer Wirkprinzipien zum redundanten oder ergänzenden Einsatz im gleichen Greifraum, **dadurch gekennzeichnet,**
**dass** er mindestens zwei Greifgutsensoren (131, 132) für unterschiedliche physikalische Größen aufweist, die jeweils am oder im Gehäusesystem (21) angeordnet sind und
**dass** mittels eines der mindestens zwei Greifgutsensoren (131, 132) prüfbar ist, ob ein aufzunehmendes Greifgut (1) sich in der Greiflage befindet, sodass das Greifgut (1) mittels des Zwei-System-Greifers (10) aufgenommen werden kann.

2. Zwei-System-Greifer (10) nach Anspruch 1, **dadurch gekennzeichnet, dass** mindestens ein erster Greifgutsensor (131) für eine von den Wirkprinzipien der beiden Greifeinrichtungen (91, 111; 92, 111) physikalisch unabhängige Größe ausgelegt ist.

3. Zwei-Greifer-System (10) nach Anspruch 1, **dadurch gekennzeichnet, dass** das Gehäusesystem (21) mindestens einen in eine Längsrichtung (15) des Zwei-System-Greifers (10) orientierten, integriertes Linearausgleichsbereich (41) aufweist.

4. Zwei-System-Greifer (10) nach Anspruch 3, **dadurch gekennzeichnet, dass** im Gehäusesystem (21) mindestens eine in der Längsrichtung (15) relativ zu einer Anschlussseite (12) oder relativ zu einer Greifgutseite (13) verschiebbares Pneumatikrohr (36) gelagert ist.

5. Zwei-System-Greifer (10) nach Anspruch 1, **dadurch gekennzeichnet, dass** eine erste Greifeinrichtung (91) der Greifeinrichtungen (91, 111) eine Magnetgreifeinrichtung (91) und eine zweite Greifeinrichtung (111) der Greifeinrichtungen (91, 111) eine Sauggreifeinrichtung (111) ist.

6. Zwei-System-Greifer (10) nach Anspruch 5, **dadurch gekennzeichnet,**
- **dass** mindestens ein Pneumatikkanal (14) das Gehäusesystem (21) von der Anschlussseite (12) zur Greifgutseite (13) durchdringt und
- **dass** im Gehäusesystem (21) ein Magnet (95) mit einem in Bezug auf die Greifgutseite (13) pneumatisch oder elektrisch steuerbaren Magnetfeld angeordnet ist.

7. Zwei-System-Greifer (10) nach Anspruch 6, **dadurch gekennzeichnet, dass** an der Greifgutseite (13) ein mindestens eine Saugöffnung (112) des Pneumatikkanals (14) und eine Felddurchtrittswand (88) des Gehäusesystems (21) geschlossen umgebende Saugmanschette (85) aus einem elastomeren Werkstoff angeordnet ist.

8. Zwei-System-Greifer (10) nach Anspruch 1, **dadurch gekennzeichnet, dass** mindestens ein Greifgutsensor (131; 132) ein induktiver oder kapazitiver Näherungssensor ist.

9. Zwei-System-Greifer (10) nach Anspruch 1, **dadurch gekennzeichnet, dass** jeder der Greifeinrichtungen (91; 92; 111) mindestens ein Funktionssensor (132; 133) zugeordnet ist.

10. Zwei-System-Greifer (10) nach Anspruch 9, **dadurch gekennzeichnet, dass** bei einer pneumatisch betätigten oder gesteuerten Greifeinrichtung (91; 111) als Funktionssensor (132) mindestens ein Drucksensor (132) im oder am Gehäusesystem (21) angeordnet ist.

## Claims

1. A two-system gripper (10) having two gripping devices (91, 111; 92, 111) that are arranged together in a housing system (21) and have different physical operating principles for redundant or supplementary use in the same gripping space,
**characterised**
**in that** it has at least two gripping item sensors (131, 132) for different physical variables, which sensors are each arranged on or in the housing system (21), and
**in that** one of the at least two gripping item sensors (131, 132) can be used to check whether a gripping item (1) to be picked up is in the gripping position so that the gripping item (1) can be picked up by means of the two-system gripper (10).

2. The two-system gripper (10) according to Claim 1, **characterised in that** at least one first gripping item sensor (131) is designed for a variable that is physically independent of the operating principles of the two gripping devices (91, 111; 92, 111).

3. The two-gripper system (10) according to Claim 1, **characterised in that** the housing system (21) has at least one integrated linear equalisation region (41), which is oriented in a longitudinal direction (15) of the two-system gripper (10).

4. The two-system gripper (10) according to Claim 3, **characterised in that** at least one pneumatic tube (36), which is displaceable in the longitudinal direction (15) relative to a connection side (12) or relative to a gripping item side (13), is mounted in the housing system (21).

5. The two-system gripper (10) according to Claim 1, **characterised in that** a first gripping device (91) of the gripping devices (91, 111) is a magnetic gripping device (91), and a second gripping device (111) of the gripping devices (91, 111) is a suction gripping device (111).

6. The two-system gripper (10) according to Claim 5, **characterised**
- **in that** at least one pneumatic duct (14) passes through the housing system (21) from the connection side (12) to the gripping item side (13), and
- **in that** a magnet (95) with a magnetic field that can be controlled pneumatically or electrically in relation to the gripping item side (13) is arranged in the housing system (21).

7. The two-system gripper (10) according to Claim 6, **characterised in that** a suction sleeve (85), which is made of an elastomer material and surrounds at least one suction opening (112) of the pneumatic duct (14) and a field passage wall (88) of the housing system (21) in a closed manner is arranged on the gripping item side (13).

8. The two-system gripper (10) according to Claim 1, **characterised in that** at least one gripping item sensor (131; 132) is an inductive or capacitive proximity sensor.

9. The two-system gripper (10) according to Claim 1, **characterised in that** each of the gripping devices (91; 92; 111) is assigned at least one functional sensor (132; 133) .

10. The two-system gripper (10) according to Claim 9, **characterised in that**, when a gripper device (91; 111) is operated or controlled pneumatically, at least one pressure sensor (132) is arranged as the functional sensor (132) in or on the housing system (21).

## Revendications

1. Préhenseur double système (10), doté de deux dispositifs de préhension (91, 111 ; 92, 111) de différents principes de fonctionnement physiques, logés dans un système de carter (21), destinés à une utilisation redondante ou complémentaire dans le même espace de préhension, **caractérisé**
**en ce qu'**il comporte au moins deux capteurs (131, 132) de pièces à saisir, pour différentes tailles physiques, qui sont placés chacun sur ou dans le système de carter (21) et
**en ce qu'**au moyen de l'un des deux capteurs (131, 132) de pièces à saisir, il est vérifiable si une pièce à saisir (1) qui doit être prise se trouve dans la position de préhension, de sorte que la pièce à saisir (1) puisse être prise par le préhenseur double système (10).

2. Préhenseur double système (10) selon la revendication 1, **caractérisé en ce qu'**au moins un premier capteur (131) de pièce à saisir est conçu pour une taille physiquement indépendante de l'un des principes de fonctionnement des deux dispositifs de préhension (91, 111 ; 92, 111).

3. Préhenseur double système (10) selon la revendication 1, **caractérisé en ce que** le système de carter (21) comporte au moins une zone de compensation linéaire (41) intégrée, orientée dans la direction longitudinale (15) du préhenseur double système (10).

4. Préhenseur double système (10) selon la revendication 3, **caractérisé en ce que** dans le système de carter (21) est logé au moins un tube pneumatique (36), déplaçable dans la direction longitudinale (15) par rapport à un côté raccordement (12) ou par rapport à un côté pièce à saisir (13).

5. Préhenseur double système (10) selon la revendication 1, **caractérisé en ce qu'**un premier dispositif de préhension (91) des dispositifs de préhension (91, 111) est un dispositif de préhension (91) magnétique et un deuxième dispositif de préhension (111) des dispositifs de préhension (91, 111) est un dispositif de préhension aspirant (111).

6. Préhenseur double système (10) selon la revendication 5, **caractérisé**
- **en ce qu'**au moins un canal pneumatique (14) traverse le système de carter (21) du côté de raccordement (12) vers le côté pièce à saisir (13) et
- **en ce que** dans le système de carter (21) est placé un aimant (95), avec un champ magnétique susceptible d'être commandé par voie pneumatique ou électrique en rapport au côté pièce à saisir (13).

7. Préhenseur double système (10) selon la revendication 6, **caractérisé en ce que** sur le côté pièce à saisir (13) est placée une manchette d'aspiration (85) en une matière élastomère, entourant de manière close au moins un orifice d'aspiration (112) du canal pneumatique (14) et une paroi de passage de champ (88) du système de carter (21).

8. Préhenseur double système (10) selon la revendication 1, **caractérisé en ce qu'**au moins un capteur (131 ; 132) de produit à saisir est un capteur de proximité inductif ou capacitif.

9. Préhenseur double système (10) selon la revendication 1, **caractérisé en ce qu'**à chacun des dispositifs de préhension (91 ; 92 ; 111) est associé au moins un capteur fonctionnel (132 ; 133).

10. Préhenseur double système (10) selon la revendication 9, **caractérisé en ce que** sur un dispositif de préhension (91 ; 111) à actionnement ou à commande pneumatique, au moins un capteur de pression (132) est placé en tant que capteur fonctionnel (132) dans ou sur le système de carter (21).
